# EUROPÄISCHE PATENTSCHRIFT

(11) **EP 3 283 303 B1**
(45) Veröffentlichungstag und Bekanntmachung des Hinweises auf die Patenterteilung: **18.09.2019**
(21) Anmeldenummer: 16714868.3
(22) Anmeldetag: 05.04.2016
(51) Int. Cl.: B60B 3/04, B60B 21/12, B60B 23/10, B60B 3/10, B60B 21/08, F16D 65/02

(54) **INTEGRIERTES FAHRZEUGRADSYSTEM IN MODULAR AUFGELÖSTER BAUWEISE**
INTEGRATED VEHICLE WHEEL SYSTEM OF MODULAR DESIGN
SYSTÈME DE ROUE DE VÉHICULE AUTOMOBILE INTÉGRÉ DE CONSTRUCTION MODULAIRE

(30) Priorität: 15.04.2015 DE 102015206830
(43) Veröffentlichungstag der Anmeldung: 21.02.2018
(73) Patentinhaber: Continental Teves AG & Co. OHG, 60488 Frankfurt am Main (DE)
(72) Erfinder: JUNGBECKER, Johann, 55576 Badenheim (DE); LINHOFF, Paul, 61267 Neu-Anspach (DE); BACH, Uwe, 65527 Niedernhausen (DE); HOFFMANN, Jens, 64285 Darmstadt (DE); METZEN, Hans-Peter, 61118 Bad Vilbel (DE); SEMSCH, Martin, 35510 Maibach-Butzbach (DE)
(86) Internationale Anmeldenummer: PCT/EP2016/057397
(87) Internationale Veröffentlichungsnummer: WO 2016/165974

(56) Entgegenhaltungen:
- DE-A1- 10 001 315
- DE-B- 1 161 158
- US-A- 4 477 120
- US-A1- 2003 011 238

## Beschreibung

Die Erfindung betrifft ein Fahrzeugradsystem mit einer Radschüssel und mit einem Felgenring für Luftreifen unter Integration eines innenumgriffenen Bremsrotors der koaxial zu einer zentral angeordneten Raddrehachse angeordnet ist und mit wenigstens einem Radbremsaktuator kooperiert.

Kostengünstige, bekannte Achssystem mit Leichtlaufrädern sind aus Komponenten konventioneller Großserienfertigung bekannter Bremsanlagen so adaptiert, dass trotz des zur Verfügung stehenden, vergrößerten Abrollradius die konventionelle Radbremskonfiguration mit einem relativ kleinen wirksamen Bremsenhalbmesser eingesetzt wird. In der Regel kommen hierbei auch die konventionellen einstückigen Bremsrotoren umfassend Topf und Reibring aus Gusswerkstoff zum Einsatz.

Ein konventionelles Rad mit einer speziell innenumgriffenen Bremsscheibe sowie mit einem entsprechend speziellen Faustsattel vom Typ ATE FR 2 geht aus Breuer/Bill, Bremsenhandbuch, Vieweg Verlag, 3. Auflage September 2006, ISBN-13 978-3-8348-0064-0, Seite 98 sowie der DE 35 08 039 C2 hervor.

Aus der DE 10 2011 079 599 A1 geht ein leicht im Verbund gebautes Fahrzeugrad in Nabe-Speiche-Felgenbett-Konfiguration vorwiegend aus Leichtmetallwerkstoff hervor, wobei der Radkörper einstückig ausgebildet ist. Im Radkörper sind in Speichen integrierte Freiräume, sowie zwischen den Speichen platzierte, zusätzliche Freiräume vorgesehen. Die Freiräume zwischen den Speichen sind mit allseitig aufliegenden und tragenden Wandscheiben hermetisch, flächig, verschlossen so dass sich eine geringe Verschmutzung bei verbessertem Luftwiderstandsbeiwert ergibt. Die Wandscheiben sind aus faserverstärktem Kunststoffmaterial mit Gewebestruktur ausgeführt und auf den Radkörper dauerhaltbar aufgeklebt, um die Kräfte zu übertragen. Des Weiteren ergibt sich nebenbei ein interessantes optisches Erscheinungsbild unter Vermeidung von Kontaktkorrosion.

Aus der GB 2 162 802 A geht ein temperatur- sowie kriechresistent armiertes Kunststoffrad in Verbundbauweise umfassend Felgenring, Radschüssel mit Nabenabschnitt sowie mit eingebetteten metallischen Verstärkungshülsen im Nabenabschnitt hervor. Das Verbundrad ist insbesondere zur Anordnung an einer Bremstrommel vorgesehen.

Es ist eine Aufgabe der vorliegenden Erfindung, eine weiterentwickelte, besonders wartungsfreundliche und beanspruchungsgerecht leicht gebaute Fahrzeugradanordnung unter Einbezug von einem Bremsrotor mit wirkungsvoll vergrößertem Reibradius vorzulegen, wobei das gebildete Fahrzeugrad weiterhin auch den thermischen Anforderungen bei besonders sportlichen Fahrzeugapplikationen unter vertretbarem Kostenaufwand genügt.

Die Aufgabe wird bei einem gattungsgemäßen Fahrzeugrad zusammen mit den kennzeichnenden Merkmalen vom Patentanspruch 1 gelöst. Dabei ist der Bremsrotor durch mehrere Auflagerabschnitte an seinem Außenumfang mit lösbaren Befestigungsmitteln austauschbar sowie zwecks Wärmeableitung thermisch leitfähig an mehreren Widerlagerabschnitten am Umfang der Radschüssel fixiert. Dadurch ist eine modular aufgelöste Bauweise (MAB) definiert, und wobei eine einheitlich axial gerichtete, effektive Verbohrung sowie Verschraubung ermöglicht ist, indem die Widerlagerabschnitte der Radschüssel und die Auflagerabschnitte vom Bremsrotor mit axial durchgehend gerichteten Befestigungsmitteln gegeneinander verspannt sind.

Die thermische Energieeinkopplung zwischen Bremsrotor und Radschüssel erfolgt im Bereich der Auflager und Widerlager durch eng gefügte Verspannung der beteiligten Komponenten gegeneinander indem die Befestigungsmittel jeweils eine Haltebuchse mit einem Innengewinde für einen Schraubbolzen mit einem Außengewinde aufweisen, und wobei zwischen Bremsrotor und Schraubbolzen zusätzlich eine Auflagebuchse zwischengeordnet ist.

Die Erfindung verzichtet auf Vollverbundbauweise. Es wird eine prinzipiell einheitlich-modulare und leicht gebaute Fahrzeugradkonstruktion vorgegeben, wobei die Radschüssel als Wärmesenke ausgebildet ist, die thermisch leitend mit dem Bremsrotor verbunden ist. Die Erfindung erlaubt eine flexible Großserienvariation in einem Baukastensystem für besonders leichte Scheibenräder, indem beispielweise ästhetisch, werkstoffmäßig oder in der Größe unterschiedlich gestaltete Radschüsseln im Austauschverbau einfach modular aufgelöst beispielsweise mit (tribologisch) unterschiedlich abgestimmten Bremsrotorwerkstoffen und/oder unterschiedlich groß gestalteten Felgenringen kombiniert werden können. Durch die Ableitung der Bremswärme in die Radschüssel ist die thermische Beanspruchung vom Felgenring reduziert, so dass eine besonders kriechresistente und dennoch sportlich-leistungsfähige Konstruktion definiert ist.

Wenn der Bremsrotor mit den Auflagerabschnitten prinzipiell kreisringförmig eben derart ausgebildet ist, dass die Auflagerabschnitte als am Umfang nach radial auswärts ausgeformte Vorsprünge ausgeprägt sind, welche Durchgangsbohrungen zur Aufnahme der Komponenten der Befestigungsmittel aufweisen, ermöglicht dies einen effektiven innenumgriffenen Bremsenaufbau.

Eine einheitlich axial gerichtete, effektive Verbohrung sowie Verschraubung wird ermöglicht, indem die Widerlagerabschnitte der Radschüssel und die Auflagerabschnitte vom Bremsrotor mit axial durchgehend gerichteten Befestigungsmitteln gegeneinander verspannt sind.

Die thermische Energieeinkopplung zwischen Bremsrotor und Radschüssel erfolgt im Bereich der Auflager und Widerlager durch eng gefügte Verspannung der beteiligten Komponenten gegeneinander indem die Befestigungsmittel jeweils eine Haltebuchse mit einem Innengewinde für einen Schraubbolzen mit einem Außengewinde aufweisen, und wobei zwischen Bremsrotor und Schraubbolzen zusätzlich eine Auflagebuchse zwischengeordnet ist.

Die formschlüssige Fixierung der Befestigungsmittel ist so, dass jede Haltebuchse mit einem endseitigen Bund integral in einer angepassten Aufnahmebohrung der Radschüssel axial fest gelagert ist. Weiterhin verfügt die Haltebuchse über einen einstückig ausgeprägten Hohlwandungsabschnitt mit dem Innengewinde für das Außengewinde vom Schraubbolzen. Zudem durchgreift der Hohlwandungsabschnitt eine Bohrungsaufnahme im Auflagerabschnitt vom Bremsrotor zumindest zu einem Teil. Die weitgehend rotationszylindrische Bauweise der Komponenten des Befestigungsmittels erlaubt sowohl dessen spanende Gestaltung als Drehteil unter Verwendung spezieller Leichtmetallwerkstoffe als auch dessen umformtechnische Gestaltung (Schlag-, Zieh- oder Pressteil in Massiv- oder Blechumformtechnologie).

Zur Vermeidung von Vorspannkraftverlusten bietet es sich an, dass die Haltebuchse, nämlich insbesondere der Hohlwandungsabschnitt oder der Schraubbolzen nämlich insbesondere dessen Schaft, reversibel elastisch deformierbar ausgebildet ist. Durch die Doppelfunktion können gesonderte Spannmittel, insbesondere gesonderte Federmittel, rationalisiert werden.

In weiterhin vorteilhaft-zweckmäßiger Ausgestaltung sind zwischen den Widerlagerabschnitten der Radschüssel und den Auflagerabschnitten vom Felgenring Befestigungsschnittstellen vorgesehen, die abgestuft ausgebildete Zentriersitze zwischen den beteiligten Komponenten sowie lösbare Befestigungsmittel integrieren. Dabei ist die formschlüssige Befestigung so ausgebildet, dass die Schnittstellen an den Auflagerabschnitten radial einwärts abgekröpfte Halteklauen umfassen, die mit radial abgestuft ausgebildeten Zentriersitzen an den Widerlagerabschnitten kooperieren. Demzufolge ist die Montagefolge der beteiligten Bauteile so, dass der Felgenring mit den radial einwärts abgekröpften Halteklauen von axial außen auf eine Radschüssel aufgelegt und fixiert wird.

Die Halteklauen verfügen über Durchgangsbohrungen für lösbar sowie einheitlich axial gerichtet angeordnete Befestigungsmittel, so dass auch diesbezüglich sämtliche entsprechenden Vorteile erschlossen werden. Zudem sind die Befestigungsmittel in der Radschüssel direkt verschraubt, so dass prinzipiell keine Manipulation von Muttern oder Gegenstücken nötig ist, was den Reifentausch mit dem Felgenring unmittelbar direkt am Fahrzeug vereinfacht, weil die Radschüssel einfach an der Radnabe verbleiben kann.

Die Erfindung ermöglicht somit ein sehr einfaches, konstruktiv einheitliches und dennoch variabel gestaltbares Fahrzeugrad, mit dem Vorteil, dass verschiedenste Werkstoffvariationen kosten- und wartungsfreundlich miteinander kombinierbar sind, und wobei von einer zwingend verklebten Verbundbauweise Abstand genommen ist. Weitere Merkmale und Einzelheiten der Erfindung gehen aus der nachfolgenden Beschreibung anhand der Zeichnung hervor. In der Zeichnung zeigt:

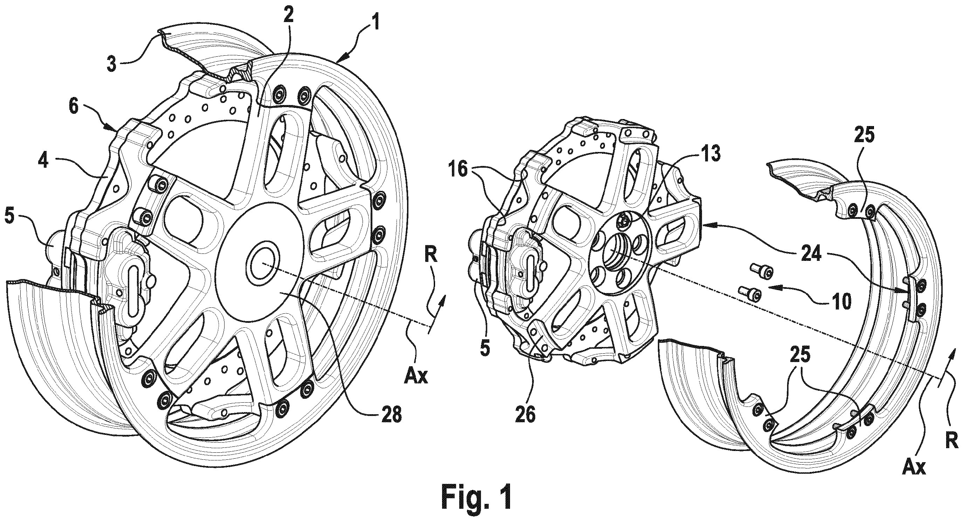

Fig. 1 Explosionszeichnung vom Fahrzeugradsystem einschließlich Radbremsaktuatorik,

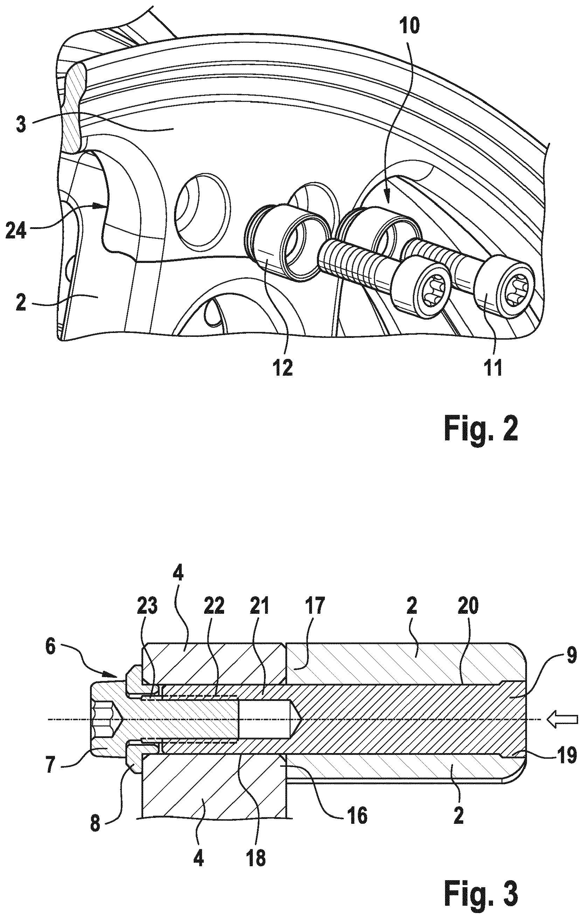

Fig. 2 Befestigungsmittel zwischen Felgenring und Radschüssel wie in Fig. 1 in vergrößerter Explosionsdarstellung,
Fig. 3 Befestigungsmittel zwischen Bremsrotor und Radschüssel wie in Fig. 2 im Schnitt,

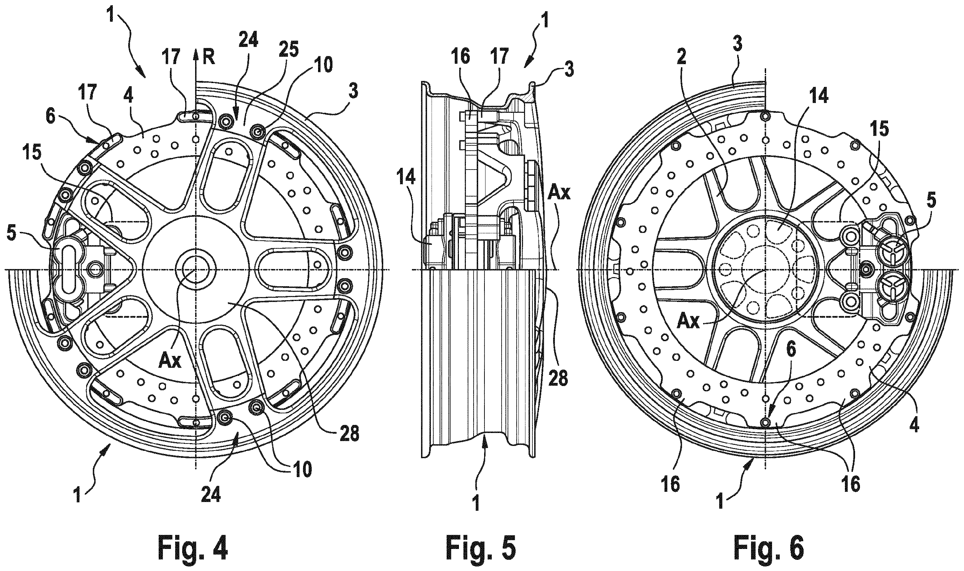

Fig. 4 Seitenansicht von rechts auf das Fahrzeugradsystem wie in Fig. 1,
Fig. 5 Draufsicht auf das Fahrzeugradystem wie in Fig. 1, und
Fig. 6 Seitenansicht von links auf das Fahrzeugradsystem nach Fig. 1.

Ein leicht gebautes Fahrzeugradsystem 1 umfasst folgende modular assemblierbaren Komponenten:
Radschüssel 2 (ggf. mit Speichen und vorzugsweise aus Leichtmetallwerkstoff wie Aluminium gefertigt),
Felgenring 3 (vorzugsweise einstückig aus Carbon-Verbundwerkstoff gefertigt), insbesondere kann der gesamte Felgenring 3 einen extrem leichten und mechanisch belastbaren Faserverbundwerkstoff umfassen,
Innenumgriffener Bremsrotor 4 ohne Topf mit Außenbefestigung (vorzugsweise einstückig aus Leichtmetallwerkstoff wie Aluminium gefertigt),
innen umgreifender Bremsaktuator 5 (vorzugsweise Festsattelbauweise und bevorzugt aus Aluminiumwerkstoff mit Halter 15 gefertigt),
Befestigungsmittel 6 zur Verspannung zwischen Bremsrotor 4 und Radschüssel 2 mit zugehörigen Komponenten wie Schraubbolzen 7, Auflagebuchse 8 und Haltebuchse 9 - jeweils axial gerichtet angeordnet,
Befestigungselemente 10 zwischen Felgenring 3 und Radschüssel 2 umfassend die Komponenten wie Schraubbolzen 11 und ein in einen Sitz im Felgenring 3 integriertes Druckstück 12 - jeweils axial gerichtet angeordnet,
Befestigungsmittel 13 zwischen Radschüssel 2 und Chassisbauteil (Nabe) 14 - jeweils axial also parallel zur Drehachse Ax gerichtet angeordnet.

Der Bremsaktuator 5 ist über einen Halter 15 drehfest mit einem Chassisbauteil 14 verbunden und überträgt die einwirkenden Bremskräfte auf das Fahrzeug. Vorzugsweise ist der Halter 15 konstruktiv an oder in eine Nabe 14 einteilig integriert.

Der Bremsrotor 4 ist mittels Befestigungsmittel 6 auf die Radschüssel 2 aufgespannt. Die Befestigungsmittel 6 umfassen mehrere Komponenten wie folgt. Ein Schraubbolzen 7 ist axial gerichtet angeordnet und durchgreift eine Durchgangsbohrung 18 in Auflagerabschnitten 16 vom Bremsrotor 4. Zur Vorspannung verfügt jeder Schraubbolzen 7 über einen Kopfabschnitt welcher eine Auflagebuchse 8 beaufschlagt. Jede Auflagebuchse 8 verfügt über einen Zentrierbund und ist in die Durchgangsbohrung 18 vom Bremsrotor eingefügt. In der Radschüssel 2 sind formschlüssig abgestufte Aufnahmen für Haltebuchse 9 mit Bund 19 arrangiert, welche jeweils mit den Außengewinden 23 der Schraubbolzen 7 unter definierter axialer Vorspannkraft in Eingriff stehen (mit vorgegebenem Drehmoment verschraubt sind). Die weitgehend rotationssymmetrisch ausgebildeten Haltebuchsen 9 oder Schraubbolzen 7 können axial elastisch vorgesehen sein, um Vorspannkraftverlust auszugleichen. Zur Herstellung von Befestigungsmitteln können Leichtmetallwerkstoff oder Schwermetallwerkstoff als dünnes Blechvorprodukt vom Coil oder als Massivwerkstoffabschnitt zwecks spanender oder spanloser Verarbeitung herangezogen werden. Mittels der im Auflagerabschnitt 16 integrierten Durchgangsbohrungen 18 wird der Bremsrotor 4 zur Radschüssel 2 zentriert und überträgt gleichzeitig das über den Bremsaktuator 5 erzeugte Bremsmoment sicher auf die Radschüssel 2. Gleichzeitig wird mittels Schraubbolzen 7 und Auf lagebuchse 8 der Bremsrotor 4 axial sicher in thermisch leitendem Kontakt gehalten. Dies gewährleistet die optimale Funktion der Wärmesenke Radschüssel 2 also eine optimale Wärmeübertragung von Bremsrotor 4 auf Radschüssel 2.

Zur planen sowie zentrisch (axial/radial) unwuchtfreien Befestigung zwischen Felgenring 3 und Radschüssel 2 dienen definiert abgestufte Schnittstellen 24 / Zentriersitz 26 mit axial gerichtet angebrachten Befestigungselementen 10 die ein Druckstück 12 und einen zugehörigen Schraubbolzen 11 mit Kopf und Schaft umfassen, und mit einem Außengewindeabschnitt in einem integralen Innengewindeabschnitt der Radschüssel 2 verschraubt ist. Jedes Druckstück 12 ist mitsamt Kopf vom Schraubbolzen 11 in einer abgestuften Aufnahme der Halteklaue 25 des Felgenrings 3 versenkt arrangiert.

Die Druckstücke 12 werden vorzugsweise formschlüssig schon während der Fertigung von einem Felgenring 3 aus Carbonwerkstoff eingearbeitet. Die radial und axial zentrierte Fixierung erfolgt mittels der axial gerichteten Schraubbolzen 11 sowie anhand der formschlüssig abgestuft sowie übergreifend ausgebildeten Schnittstelle 24 zwischen Halteklaue 25 und Radschüssel. In die Radschüssel 2 sind Gegengewinde für die Schraubbolzen 11 integriert. Eine lösbar fixierte Blende 28 kann Radbefestigungsmittel 13, Zentrierbund zwischen Radschüssel und Nabe oder ähnliches verdecken.

Das neuartige Fahrzeugradsystem 1 ermöglicht ein neuartiges, günstiges sowie erleichtertes Variierungs- und Wartungskonzept im Service sowie auch in der Logistik betreffend Sommer oder Winterbereifung. Demzufolge wird begleitend zu dem neuartigen Fahrzeugradkonzept vorgeschlagen, dass die erfindungsgemäße Radschüssel 2 zum weitgehend dauerhaften Verbleib am Chassisbauteil 14 (Nabe) vom Fahrzeug vorgesehen ist, wohingegen lediglich der lösbar an der Radschüssel 2 montierte Felgenring 3 jeweils ausgetauscht wird. Dies reduziert den logistischen Aufwand und ermöglicht dazu ein neuartiges Wartungskonzept.

### Bezugszeichenliste

- 1: Fahrzeugradsystem
- 2: Radschüssel
- 3: Felgenring
- 4: Bremsrotor
- 5: Bremsaktuator
- 6: Befestigungsmittel
- 7: Schraubbolzen
- 8: Auflagebuchse
- 9: Haltebuchse
- 10: Befestigungselement
- 11: Schraubbolzen
- 12: Druckstück
- 13: Befestigungsmittel
- 14: Chassisbauteil
- 15: Halter
- 16: Auflagerabschnitt
- 17: Widerlagerabschnitt
- 18: Durchgangsbohrung
- 19: Bund
- 20: Aufnahmebohrung
- 21: Hohlwandungsabschnitt
- 22: Innengewinde
- 23: Außengewinde
- 24: Befestigungsschnittstelle
- 25: Halteklaue
- 26: Zentriersitz
- 27: Befestigungsflansch
- 28: Blende

- Ax: Drehachse / Axialrichtung
- R: Radialrichtung

## Patentansprüche

1. Fahrzeugradsystem (1) für Kraftfahrzeuge umfassend eine zentrale Radschüssel (2) mit Befestigungsflansch (27) zur Anordnung an einem Chassisbauteil (14), und mit einem integrierten Bremsrotor (4) der koaxial zu einer zentralen Drehachse Ax vorgesehen ist, und dessen Außenumfang an der Radschüssel (2) fixiert ist, und im Übrigen frei nach radial innen orientiert ist, der Bremsrotor (4) durch mehrere Auflagerabschnitte (16) an seinem Außenumfang mit lösbaren Befestigungsmitteln (6) austauschbar sowie zwecks Wärmeableitung thermisch leitfähig an mehreren Widerlagerabschnitten (17) vom Umfang der Radschüssel (2) fixiert ist, wobei die Widerlagerabschnitte (17) der Radschüssel (2) und die Auflagerabschnitte (16) vom Bremsrotor (4) mit axial gerichteten Befestigungsmitteln (6) gegeneinander verspannt sind, und dass die Befestigungsmittel (6) jeweils eine Haltebuchse (9) mit einem Innengewinde (22) für einen Schraubbolzen (7) mit einem Außengewinde (23) aufweisen, wobei zwischen Bremsrotor (4) und Schraubbolzen (7) zusätzlich eine Auflagebuchse (8) zwischengeordnet ist.

2. Fahrzeugradsystem (1) nach Anspruch 1, **dadurch gekennzeichnet, dass** der Bremsrotor (4) mit den Auflagerabschnitten (16) kreisringförmig eben derart ausgebildet ist, dass die Auflagerabschnitte (16) als am Umfang nach radial auswärts ausgeformte Vorsprünge ausgeprägt sind, welche Durchgangsbohrungen (18) zur Aufnahme von Komponenten der Befestigungsmittel (6) aufweisen.

3. Fahrzeugradsystem (1) nach Anspruch 1, **dadurch gekennzeichnet, dass** jede Haltebuchse (9) mit einem endseitigen Bund (19) integral in einer angepassten Aufnahmebohrung (20) der Radschüssel (2) axial formschlüssig fixiert ist, dass die Haltebuchse (9) über einen einstückig ausgeprägten Hohlwandungsabschnitt (21) mit dem Innengewinde (22) für das Außengewinde (23) vom Schraubbolzen (7) verfügt, und wobei der Hohlwandungsabschnitt (21) die Durchgangsbohrung (18) im Auflagerabschnitt (16) vom Bremsrotor (4) zumindest teilweise durchgreift.

4. Fahrzeugradsystem (1) nach zumindest einem der Ansprüche 1 oder 3, **dadurch gekennzeichnet, dass** der Schraubbolzen (7) und/oder die Haltebuchse (9) reversibel elastisch deformierbar ausgebildet ist.

5. Fahrzeugradsystem (1) nach einem oder mehreren der vorhergehenden Ansprüche, **dadurch gekennzeichnet, dass** zwischen den Widerlagerabschnitten (17) der Radschüssel (2) und den Auflagerabschnitten (16) vom Felgenring (3) Befestigungsschnittstellen (24) definiert sind, welche Zentriersitze (26) zwischen den beteiligten Komponenten sowie lösbare Befestigungselemente (10) enthält.

6. Fahrzeugradsystem (1) nach Anspruch 5, **dadurch gekennzeichnet, dass** jede Schnittstelle (24) am Felgenring (3) eine radial einwärts abgekröpfte Halteklaue (25) umfasst, die mit einem radial abgestuft ausgebildeten Zentriersitz (26) der Radschüssel (2) kooperiert.

7. Fahrzeugradsystem (1) nach Anspruch 6, **dadurch gekennzeichnet, dass** jede Halteklaue Durchgangsbohrungen für lösbar sowie axial gerichtet angeordnete Befestigungselemente (10) aufweist, und dass die Befestigungselemente (10) in der Radschüssel (2) verschraubt sind.

## Claims

1. Vehicle wheel system (1) for motor vehicles comprising a central wheel disk (2) having an attachment flange (27) for arrangement on a chassis component (14) and having an integrated brake rotor (4) which is provided coaxially with respect to a central rotational axis Ax, and whose outer circumference is secured to the wheel disk (2) and is otherwise freely oriented in the radially inward direction, the brake rotor (4) is secured in an exchangeable fashion by a plurality of support sections (16) on its outer circumference with detachable attachment means (6) and, for the purpose of conducting away heat, is secured in a thermally conductive fashion to a plurality of abutment sections (17) on the circumference of the wheel disk (2), wherein the abutment sections (17) of the wheel disk (2) and the support sections (16) of the brake rotor (4) are clamped relative to one another by attachment means (6) which are oriented axially, and in that the attachment means (6) in each case comprise a retaining bush (9) with an internal thread (22) for a screw bolt (7) with an external thread (23), and wherein additionally a bearing bush (8) is interposed between the brake rotor (4) and the screw bolt (7).

2. Vehicle wheel system (1) according to Claim 1, **characterized in that** the brake rotor (4) is configured with the support sections (16) in a circular and planar manner, such that the support sections (16) are designed as projections which are shaped radially outwardly on the circumference and which comprise through-bores (18) for receiving components of the attachment means (6).

3. Vehicle wheel system (1) according to Claim 1, **characterized in that** each retaining bush (9) is positively axially secured with a collar (19) on the end side, integrally in an adapted receiving bore (20) of the wheel disk (2), such that the retaining bush (9) has a hollow wall portion (21) which is designed in one piece, comprising the internal thread (22) for the external thread (23) of the screw bolt (7), and wherein the hollow wall portion (21) at least partially penetrates the through-bore (18) in the support section (16) of the brake rotor (4).

4. Vehicle wheel system (1) according to at least one of Claims 1 and 3, **characterized in that** the screw bolt (7) and/or the retaining bush (9) is configured to be deformable in a reversible, resilient manner.

5. Vehicle wheel system (1) according to one or more of the preceding claims, **characterized in that** attachment interfaces (24) are defined between the abutment sections (17) of the wheel disk (2) and the support sections (16) of the rim ring (3), said attachment interfaces containing centering seats (26) between the relevant components and the detachable attachment elements (10).

6. Vehicle wheel system (1) according to Claim 5, **characterized in that** each interface (24) on the rim ring (3) comprises a retaining claw (25) which is bent radially inwardly at right angles and which cooperates with a centering seat (26) of the wheel disk (2) which is configured in a radially stepped manner.

7. Vehicle wheel system (1) according to Claim 6, **characterized in that** each retaining claw comprises through-bores for attachment elements (10) arranged so as to be oriented in a detachable and axial manner, and **in that** the attachment elements (10) are screwed into the wheel disk (2).

## Revendications

1. Système de roue de véhicule (1) pour des véhicules automobiles, comprenant un voile de roue central (2) avec une bride de fixation (27) pour l'agencement sur un composant de châssis (14), et avec un rotor de frein intégré (4) qui est prévu de façon coaxiale à un axe de rotation central Ax, et dont la périphérie extérieure est fixée au voile de roue (2), et qui par ailleurs est orientée librement radialement vers l'intérieur, le rotor de frein (4) est fixé par plusieurs parties d'appui (16) à sa périphérie extérieure de façon remplaçable avec des moyens de fixation démontables (6) ainsi que pour l'évacuation de la chaleur de façon thermiquement conductrice à plusieurs parties de contre-appui (17) de la périphérie du voile de roue (2), dans lequel les parties de contre-appui (17) du voile de roue (2) et les parties d'appui (16) du rotor de frein (4) sont serrées les unes contre les autres avec des moyens de fixation (6) orientés axialement, et en ce que les moyens de fixation (6) présentent respectivement une douille de maintien (9) avec un filet intérieur (22) pour un boulon à visser (7) avec un filet extérieur (23), dans lequel une douille d'appui (8) est en outre interposée entre le rotor de frein (4) et le boulon à visser (7).

2. Système de roue de véhicule (1) selon la revendication 1, **caractérisé en ce que** le rotor de frein (4) avec les parties d'appui (16) est plan en forme d'anneau circulaire, de telle manière que les parties d'appui (16) soient embouties en forme de saillies enfoncées radialement vers l'extérieur à la périphérie, qui présentent des trous de passage (18) destinés à recevoir des composants des moyens de fixation (6).

3. Système de roue de véhicule (1) selon la revendication 1, **caractérisé en ce que** chaque douille de maintien (9) est fixée en emboîtement axial avec un bourrelet d'extrémité (19) intégralement dans un alésage de réception adapté (20) du voile de roue (2), **en ce que** la douille de maintien (9) est munie d'une partie de paroi creuse refoulée d'une pièce (21) avec le filet intérieur (22) pour le filet extérieur (23) du boulon à visser (7), et dans lequel la partie de paroi creuse (21) traverse au moins en partie le trou de passage (18) dans la partie d'appui (16) du rotor de frein (4).

4. Système de roue de véhicule (1) selon au moins une des revendications 1 ou 3, **caractérisé en ce que** le boulon à visser (7) et/ou la douille de maintien (9) sont élastiquement déformables de façon réversible.

5. Système de roue de véhicule (1) selon une ou plusieurs des revendications précédentes, **caractérisé en ce que** des interfaces de fixation (24) sont définies entre les parties de contre-appui (17) du voile de roue (2) et les parties d'appui (16) de l'anneau de jante (3), qui comportent des pointes de centrage (26) entre les composants concernés ainsi que des éléments de fixation démontables (10).

6. Système de roue de véhicule (1) selon la revendication 5, **caractérisé en ce que** chaque interface (24) comprend sur l'anneau de jante (3) une griffe de maintien (25) coudée radialement vers l'intérieur, qui coopère avec un siège de centrage radialement étagé (26) du voile de roue (2).

7. Système de roue de véhicule (1) selon la revendication 6, **caractérisé en ce que** chaque griffe de maintien présente des trous de passage pour des éléments de fixation (10) disposés de façon démontable et orientés axialement, et **en ce que** les éléments de fixation (10) sont vissés dans le voile de roue (2).
